# EUROPEAN PATENT APPLICATION

(11) **EP 1 764 021 A1**
(43) Date of publication of application: **21.03.2007**
(21) Application number: 05425650.8
(22) Date of filing: 16.09.2005
(51) Int. Cl.: A47L 9/24

(54) **Extension tube for domestic cleaning devices and domestic cleaning device comprising such an extension tube**

(71) Applicant: IMETEC S.p.A., 24052 Azzano S.Paolo (Bergamo) (IT)
(72) Inventor: Morgandi, Arturo, 24129 Bergamo (IT); Carrara, Osvaldo, 24020 Casnigo (BG) (IT)
(74) Representative: Castiglia, Paolo

(57) **Abstract**

An extension tube (100) for a domestic cleaning device comprises: a first and a second rigid tubular element (1,2) having respective longitudinal axes (X₁-X₁, X₂-X₂) connected through an articulated joint (3) having an articulation axis (Y-Y) substantially perpendicular to a plane (P) defined by said longitudinal axes (X₁-X₁ and X₂-X₂), and a flexible tubular element (40) to put the first and the second rigid tubular element (1,2) in fluid communication at the articulated joint (3). The articulated joint (3) is configured in such a way that the articulation axis (Y-Y) does not intersect the longitudinal axes (X₁-X₁, X₂-X₂).

## Description

The present invention refers, in a first aspect thereof, to an extension tube for domestic cleaning devices.

In a second aspect thereof, the invention refers to a domestic cleaning device comprising such an extension tube.

In a third aspect thereof, the invention refers to a vacuum cleaner comprising a suction pipe including such an extension tube.

Known domestic cleaning devices, be they suction devices, such as for example vacuum cleaners, and/or fluid jet devices, such as for example steam jet cleaners or air blowers, essentially comprise a machine body and a suction and/or ejection pipe connected to the machine body and defining a suction and/or ejection mouth at a free end thereof.

In some domestic cleaning devices the machine body and the suction and/or ejection pipe are firmly connected to each other, and during the cleaning operations the user manoeuvres both of them as a single body. In other domestic cleaning devices the suction and/or ejection pipe is instead structurally independent from the machine body; in this case the user manoeuvres the suction and/or ejection pipe substantially independently from the machine body, which rests on a floor or other surface and is typically dragged along or else carried over the shoulder.

In domestic cleaning devices where the suction and/or ejection pipe is structurally independent from the machine body, such a pipe generally comprises a rigid end portion connected to the machine body through a flexible portion.

This ensures a suitable freedom of movement of the suction and/or ejection pipe with respect to the machine body during cleaning operations. The rigid end portion can also be telescopic or else it can be equipped with suitable extension tubes, also rigid, to increase its reach. Thanks to this provision it is possible to simply and reversibly modify the length of the suction and/or ejection pipe, for example to adapt it to the height of different users or else to reach points far from the position where the user is, without forcing him to continuously move around.

A technical problem occurring when suction and/or ejection pipes having rigid portions of a certain length are used is related to the difficulty and awkwardness of use of such pipes for cleaning hidden or hard-to-reach areas, such as for example gaps between a bed, a sofa or other piece of furniture and the floor. In order to clean such areas the user must indeed bend over or take uncomfortable or tiring positions, increasingly so the smaller the gap and/or the longer the rigid portion of the suction and/or ejection pipe.

The prior art provides for some solutions to such a technical problem.

For example, patent application EP 1 226 777 describes an extension tube for vacuum cleaner suction pipes comprising an upper portion equipped with grip means and adapted to be associated with the suction pipe and a lower portion carrying the suction mouth, which are connected together through an articulated joint that allows the user to bend a portion of the extension tube with respect to the other portion by a predetermined angle and to maintain such a position through locking means of the articulated joint.

The purpose of the present invention is to provide an extension tube for domestic cleaning devices that allows the technical problem discussed above relative to the cleaning of hard-to-reach areas to be solved and that has improved characteristics in terms of flexibility and ease of use compared to known devices.

According to a first aspect thereof, the invention therefore refers to an extension tube for a domestic cleaning device, comprising:
- a first and a second rigid tubular element having respective longitudinal axes and connected through an articulated joint having an articulation axis substantially perpendicular to a plane defined by said longitudinal axes;
- a flexible tubular element to put said first and said second rigid tubular element in fluid communication at said articulated joint,
characterised in that said articulated joint is configured in such a way that said articulation axis does not intersect said longitudinal axes.

Thanks to the articulation axis of the articulated joint not intersecting the longitudinal axes of the first and of the second rigid tubular element, the extension tube of the invention can be freely bent substantially at any angle physically allowed by the configuration and/or position of the articulated joint, without the rigid tubular elements interfering with each other. This advantageously allows not only to better adjust the extension tube for any cleaning requirement of hidden or hard-to-reach areas, such as for example gaps between a piece of furniture and the floor, but also allows the extension tube to be bent substantially upon itself, to reduce its size for example when it has to be stowed away. The ease and flexibility of use of an extension tube according to the invention are therefore advantageously increased.

Preferably, the articulated joint comprises a locking mechanism suitable for defining a first operating configuration of the extension tube, wherein the first and the second rigid tubular element are locked in at least one predetermined mutual angular position, and a second operating configuration of the extension tube, wherein the first and the second rigid tubular element are free to take a plurality of mutual angular positions.

Advantageously, in the first operating configuration the locking mechanism firmly maintains the extension tube in an overall rigid configuration, typically used for cleaning operations of open spaces, whereas in the second operating configuration the locking mechanism frees the articulated joint and the extension tube can bend freely, following the movements of the user for cleaning operations in hidden or hard-to-reach areas.

Preferably, in said at least one predetermined mutual angular position the first and the second rigid tubular element are substantially mutually aligned. The extension tube has in this case the maximum longitudinal extension and can thus be easily used for common cleaning operations of floors or other exposed surfaces.

In a preferred embodiment of the invention, the locking mechanism comprises a rigid locking body slidably associated with the first and second rigid tubular element and movable between a first stop position defining the first operating configuration, wherein said rigid locking body locks the articulated joint, and a second stop position defining the second operating configuration, wherein said rigid locking body frees the articulated joint.

The actuation of the locking mechanism in this case advantageously takes place through a translation movement that is intuitive and easy to be carried out by the user even without interrupting the cleaning operations.

Preferably, the locking mechanism comprises stop means for maintaining the rigid locking body in the first stop position and in the second stop position.

Such stop means, of the conventional type, allows the rigid locking body to be prevented from unintentionally translating during the cleaning operations, modifying the set locking conditions and thus the desired configuration of the extension tube for a given cleaning operation.

Preferably, the rigid locking body comprises a third rigid tubular element having a longitudinal slit for receiving the articulated joint in the first operating configuration, and the extension tube comprises a longitudinally extensible tubular element associated with said third rigid tubular element and extensible over the length of said slit to ensure the fluid-tight seal at the slit in said second operating configuration.

In this embodiment of the locking mechanism, the rigid locking body, besides carrying out the locking function, advantageously allows the overall longitudinal length of the extension tube to be increased in the second operating configuration, which length would be reduced due to the articulated configuration. In this way a user can maintain a substantially upright position even when the extension tube is used in the second operating configuration.

Preferably, the longitudinally extensible tubular element is flexible and has a first end portion fixed to said third rigid tubular element and a second end portion fixed to said second rigid tubular element.

The structure of the extension tube can in this case advantageously be simplified since the longitudinally extensible tubular element and the flexible tubular element, which puts the first and the second rigid tubular element in fluid communication at the articulated joint, can be formed from the same single tubular element.

Preferably, the third rigid tubular element at least partially houses the first rigid tubular element and the locking mechanism comprises a grip sleeve firmly associated with the first rigid tubular element and externally slidable on the third rigid tubular element.

The grip sleeve advantageously allows the locking mechanism to be actuated in a simple manner when the third rigid tubular element is kept steady - as typically happens during use, since such a tubular element is connected to the suction and/or ejection pipe of the cleaning device - and the first and second rigid tubular element are made to slide.

Preferably, the extension tube comprises rolling means for causing said extension tube in the second operating configuration to slide on a support surface.

More preferably, such rolling means comprise at least one wheel associated with the rigid locking body of the locking mechanism.

The rolling means advantageously avoid that, when the extension tube is used in the articulated configuration, the articulated joint drags on the support surface, for example a floor surface, causing scratches or damage to the surface itself.

In another preferred embodiment of the invention, the locking mechanism comprises a toothed coupling between the first and the second rigid tubular element at said articulated joint, said toothed coupling being selectively actuatable through actuating means for passing between the first operating configuration and the second operating configuration of the extension tube.

Advantageously, the locking mechanism can in this case be at least partially directly formed in the first and/or in the second rigid tubular element at the articulated joint, simplifying the structure and reducing the size thereof. Moreover, the use of a toothed coupling easily allows the passage at least from one operating configuration of the extension tube to the other to be carried out without necessarily having to act upon the locking mechanism. In particular, passage from the second operating configuration to the first operating configuration, i.e. locking of the articulated joint, preferably occurs automatically, when the first and the second rigid tubular element are brought into the at least one predetermined mutual angular locking position.

Preferably, the toothed coupling and the actuating means are active along the articulation axis of the articulated joint.

Preferably, the toothed coupling comprises at least one toothed element and at least one respective seat defined in the first or in the second rigid tubular element and the actuating means are active on the toothed coupling in such a way that in the first operating configuration the at least one toothed element engages the at least one respective seat and in the second operating configuration the at least one toothed element frees the at least one respective seat.

Preferably, the actuating means comprise elastic means, such as for example one or more helical springs, Belleville springs or leaf springs. It is also possible for such elastic means to be suitably formed in structural elements of the locking mechanism when they have a sufficient degree of flexibility.

Preferably, in this embodiment of the invention, in the first operating configuration of the extension tube the first and the second rigid tubular element can be locked in at least one further predetermined mutual angular position. Preferably, in this further angular position the first and second rigid tubular element are substantially bent upon each other.

Preferably, also in this embodiment the extension tube of the invention comprises rolling means at the articulated joint for allowing the extension tube in the second operating configuration to slide on a support surface. The rolling means preferably comprise a pair of wheels arranged at opposite sides with respect to the longitudinal axes of the first and second rigid tubular element.

Preferably, the rolling means have a rotation axis substantially coinciding with the articulation axis of the articulated joint.

In the case where both the aforementioned locking mechanism and the rolling means are present, the locking mechanism is preferably associated with the rolling means.

More preferably, the locking mechanism and the rolling means are at least partially firmly connected with respect to translations along the articulation axis of the articulated joint for passing between the first operating configuration and the second operating configuration of the extension tube.

Thanks to these features advantageously the extension tube of the invention wholly has a particularly compact structure, where the articulated joint, the locking mechanism and the rolling means can be made with a small number of components. Moreover, the rolling means can advantageously be used to act on the actuation means of the locking mechanism.

According to a second aspect thereof, the invention refers to a domestic cleaning device comprising an extension tube of the type described above.

According to a third aspect thereof, the invention refers to a vacuum cleaner comprising a suction pipe including an extension tube of the type described above.

Further characteristics and advantages of the present invention shall become clearer from the following detailed description of preferred embodiments thereof, made hereafter, for indicating and not limiting purposes, with reference to the attached drawings. In such drawings:
- figure 1 is a perspective view of an extension tube for domestic cleaning devices according to a first embodiment of the invention in a first operating configuration, with the first and second rigid tubular element aligned;
- figure 2 is a perspective view of the extension tube of figure 1 in a second operating configuration, with the first and second rigid tubular element articulated;
- figure 2a is a perspective view of the extension tube of figure 1 in the second operating configuration, with the first and second element bent upon each other;
- figure 3 is a top view of the extension tube of figure 1;
- figure 4 is a sectional side view of the extension tube of figure 3;
- figure 5 is a top view of the extension tube of figure 1 in the second operating configuration, with the first and second rigid tubular element aligned;
- figure 6 is a sectional side view of the extension tube of figure 5;
- figure 7 is a front view of the extension tube of figure 2;
- figure 8 is a sectional side view of the extension tube of figure 7;
- figure 9 is a top view of the extension tube of figure 1 in the second operating configuration, wherein the first and second rigid tubular element are bent upon each other;
- figure 10 is a sectional side view of the extension tube of figure 9;
- figure 11 is a perspective view of an extension tube for domestic cleaning devices according to a second embodiment of the invention in a second operating configuration, with the first and second rigid tubular element articulated;
- figure 12 is an exploded perspective view of the extension tube of figure 11;
- figure 13 is a sectional view of the articulated joint of the extension tube of figure 11 taken along the articulation axis;
- figure 14 is a side view of the extension tube of figure 11, in a first operating configuration, with the first and second rigid tubular element aligned;
- figure 15 is a side view of the extension tube of figure 11 in the first operating configuration, with the first and second rigid tubular element bent upon each other;
- figure 16 is a schematic side view of a vacuum cleaner comprising the extension tube of figure 11.

In such figures, an extension tube for domestic cleaning devices according to the invention is globally indicated with reference numeral 100.

The extension tube 100 comprises a first rigid tubular element 1 and a second rigid tubular element 2 having respective longitudinal axes X₁-X₁ and X₂-X₂ and respective end portions 1a, 1b and 2a, 2b. The rigid tubular elements 1, 2 are pivotally connected, at the adjacent end portions 1b and 2a, through an articulated joint 3 having an articulation axis Y-Y substantially perpendicular to a plane P defined by the longitudinal axes X₁-X₁ and X₂-X₂.

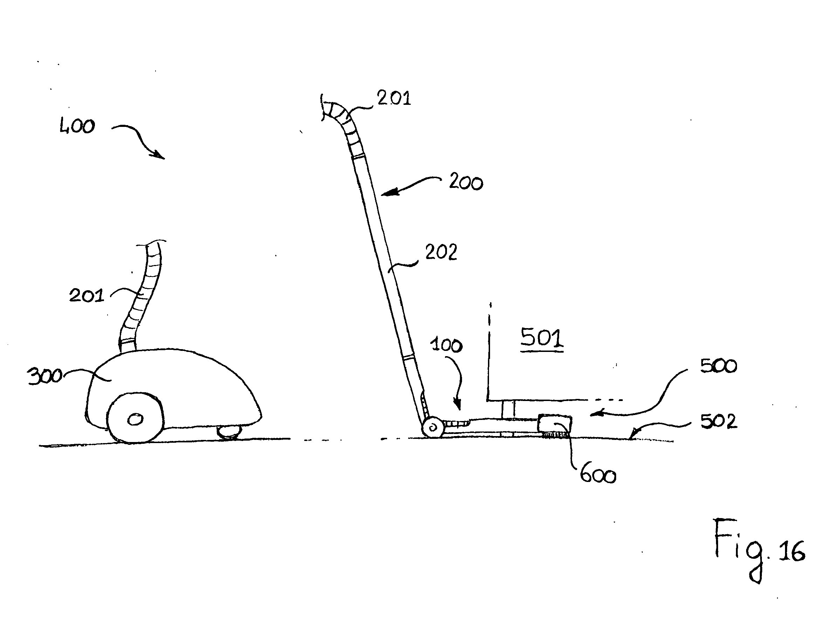

The end portion 1a of the rigid tubular element 1 can be removably connected to a suction and/or ejection pipe of a domestic cleaning device, while the end portion 2b of the rigid tubular element 2 can itself define a suction or ejection mouth, or else can be connected to further extension tubes, or to specific cleaning tools, such as pads, brushes or nozzles of different shapes and function, as shown for example in figure 16.

A flexible tubular element 4 puts the rigid tubular elements 1 and 2 in fluid communication at the articulated joint 3.

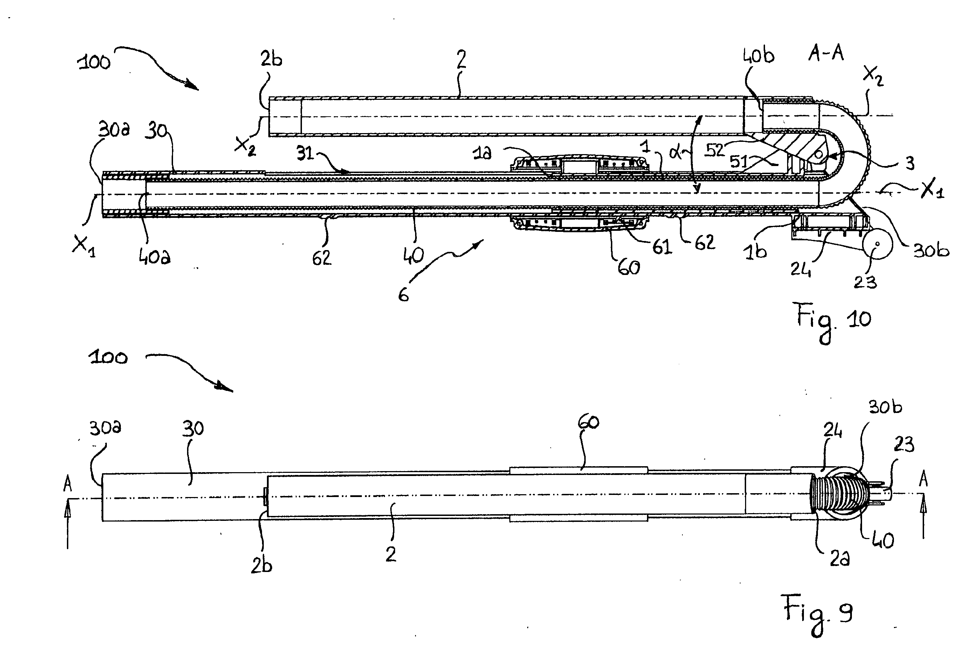

According to the invention, the articulated joint 3 is configured in such a way that the articulation axis Y-Y does not intersect the longitudinal axes X₁-X₁ and X₂-X₂. The rigid tubular elements 1 and 2 can therefore take a plurality of mutual angular positions at which the respective longitudinal axes X₁-X₁ and X₂-X₂ form with each other an angle α that can vary within a wide range, without there being interference between them. In particular, the invention makes it possible to obtain also angles α equal to about 0° or to about 360°, according to the position of the articulation axis Y-Y with respect to the rigid tubular elements 1 and 2 (see figures 10 and 15 respectively). This means that the rigid tubular elements 1 and 2 can also be bent upon each other, for example to advantageously reduce the size of the extension tube 100 when it has to be stowed away.

The articulated joint 3 is essentially made of a pin 5 that is inserted, along the articulation axis Y-Y, in holes formed in pin supports 51, 52 suitably formed respectively at the end portions 1b and 2a of the rigid tubular elements 1 and 2.

The articulated joint 3 comprises a locking mechanism 6 that allows, in a first operating configuration of the extension tube 100, the articulated joint 3 to be locked, so that the rigid tubular elements 1 and 2 are locked in at least one predetermined mutual angular position, and, in a second operating configuration of the extension tube 100, the articulated joint 3 to be freed, so that the rigid tubular elements 1 and 2 can be bent freely to take a plurality of mutual angular positions in a substantially continuous way.

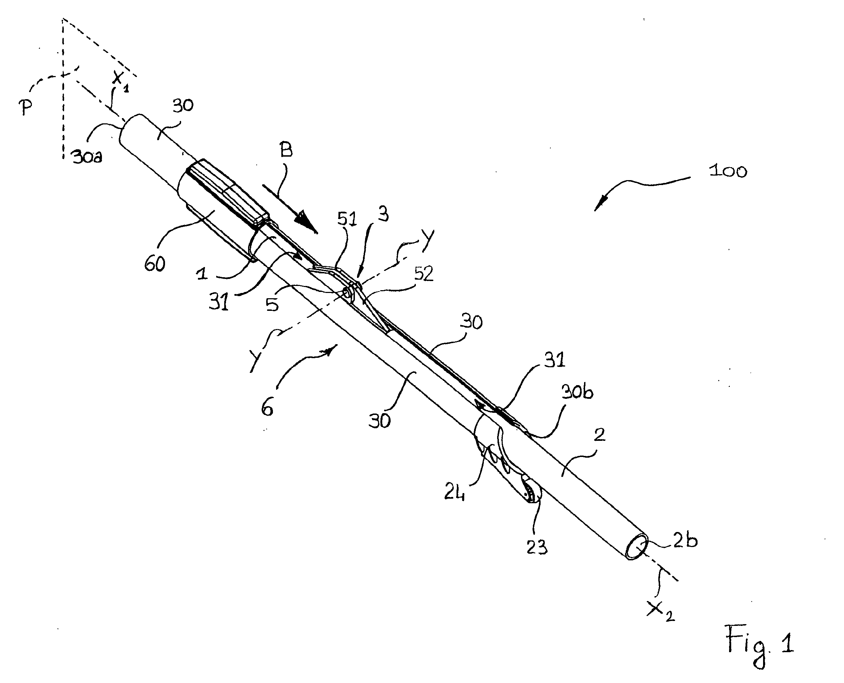

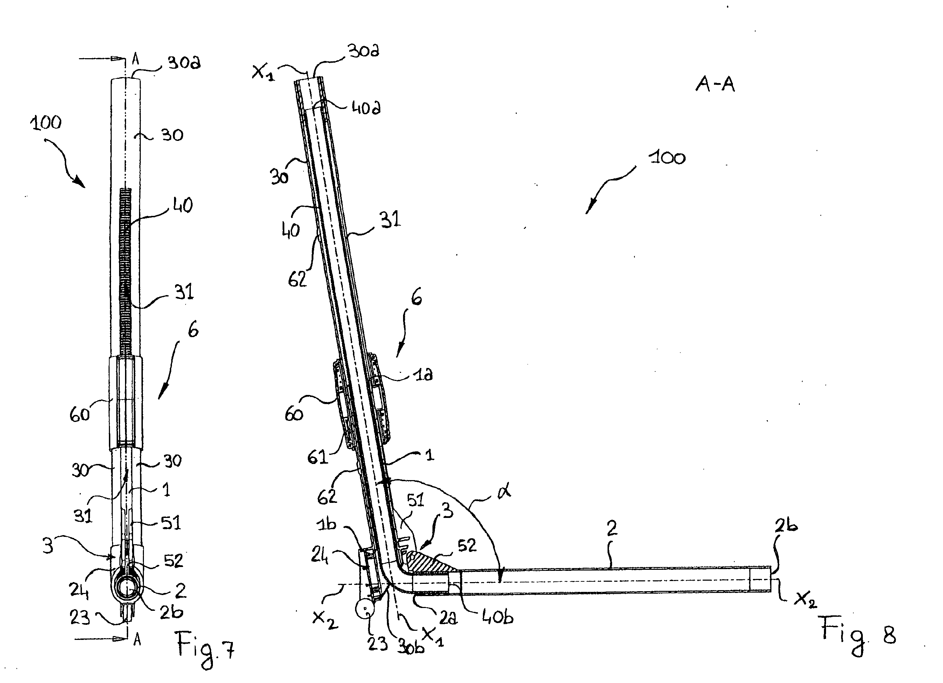

In a first preferred embodiment (figures 1-10) the locking mechanism 6 comprises a rigid locking body essentially consisting of a third rigid tubular element 30 externally and slidably associated with the rigid tubular elements 1 and 2. In this case the connection between the extension tube 100 and the suction and/or ejection pipe of a domestic cleaning device takes place at a first end portion 30a of the rigid tubular element 30.

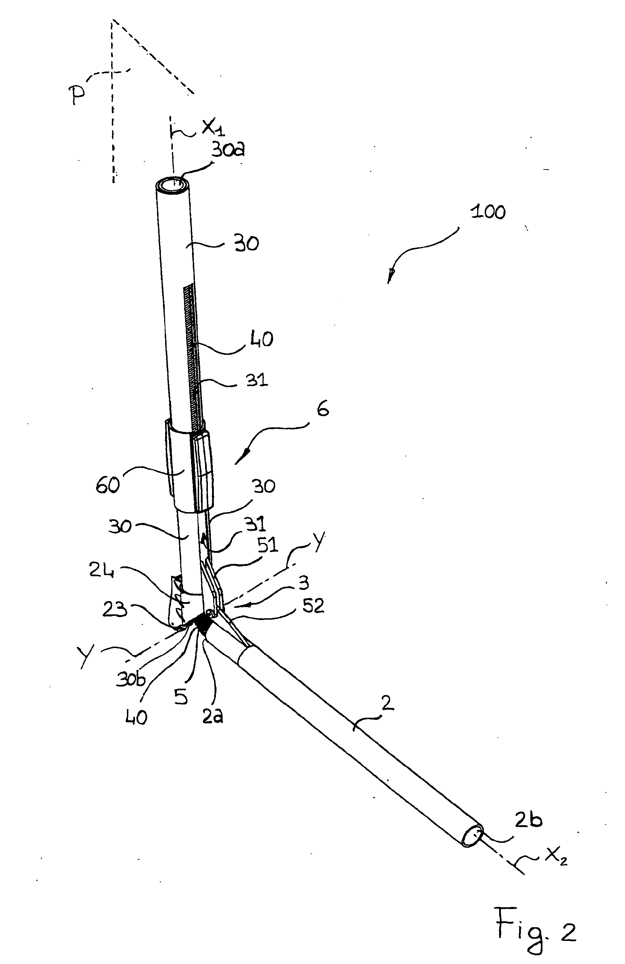

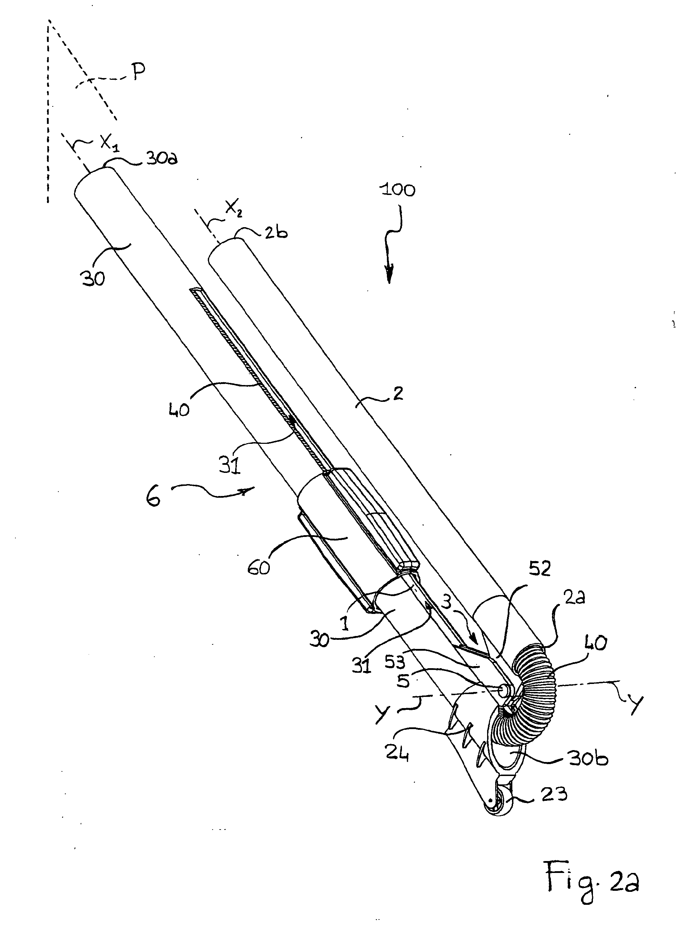

The rigid tubular element 30 is movable between a first stop position, wherein it locks the articulated joint 3 (first operating configuration of the extension tube 100, see figures 1, 3 and 4), and a second stop position, wherein it frees the articulated joint 3 (second operating configuration of the extension tube 100, see figures 2, 5-10). In particular, when the rigid tubular element 30 locks the articulated joint 3 the rigid tubular elements 1 and 2 are substantially aligned (α = 180°).

The rigid tubular element 30 is provided with a longitudinal slit 31 that extends from a second end portion 30b thereof for at least a part of its length and allows the pin supports 51 and 52 of the articulated joint 3 to be received when this is locked by the rigid tubular element 30.

Inside the rigid tubular element 30 and the rigid tubular element 1 a longitudinally extensible tubular element 40 is arranged having a first end portion 40a fixed to the rigid tubular element 30 and a second end portion 40b fixed to the rigid tubular element 2. The longitudinally extensible tubular element 40 ensures the fluid-tight seal at the longitudinal slit 31, particularly in the second operating configuration of the extension tube 100.

In the embodiment illustrated herein the longitudinally extensible tubular element 40 and the flexible tubular element 4 that connects the rigid tubular elements 1 and 2 consist of a single tubular element having suitable characteristics of extensibility and flexibility, for example a corrugated tube. It is however possible to provide for embodiments (not illustrated) wherein the longitudinally extensible tubular element 40 and the flexible tubular element 4 are distinct. In this case the end portion 40b of the longitudinally extensible tubular element 40 is typically fixed to the rigid tubular element 1.

It shall also be observed that if the longitudinally extensible tubular element 40 extends inside the rigid tubular element 1 along the entire longitudinal extension thereof, the latter does not necessarily have a continuous structure because the fluid-tight seal is in any case ensured by the longitudinally extensible tubular element 40. In this case the rigid tubular element 1 can for example have a cage-shaped structure or another structure that ensures a sufficient structural rigidity of the extension tube 100.

A grip sleeve 60 is firmly associated with the rigid tubular element 1 and can externally slide on the rigid tubular element 30 to make it easier to hold the rigid tubular element 1 and to actuate the locking mechanism 6, as better described hereafter.

In the embodiment illustrated herein the sliding between grip sleeve 60 and rigid tubular element 30 takes place with grazing contact, but it is also possible that it takes place with the operative interposition of rolling elements, such as for example conical, cylindrical or barrel rollers.

At the grip sleeve 60 stop means are provided suitable for stably maintaining the relative position of the rigid tubular element 30 with respect to the rigid tubular elements 1 and 2 in the aforementioned first and second stop position, so that the extension tube 100 can remain, respectively, in the first and second operating position thereof without the need of a constant action on the sleeve 60 by the user for maintaining such operating positions. The stop means are of a conventional type known to those skilled in the art and, in the case illustrated herein, essentially comprise a projection 61 defined in the sleeve 60 suitable for engaging in recesses or holes 62 suitably formed on the outer surface of the rigid tubular element 30.

In the preferred embodiment illustrated herein, the extension tube 100 further comprises rolling means allowing said extension tube to slide on a support surface, for example a floor. Such rolling means comprise a wheel 23 associated, through a support 24, with the rigid tubular element 30 at the second end portion 30b thereof. Such a position is selected so that, in the second operating configuration of the extension tube 1, the wheel 23 is located at the articulated joint 3.

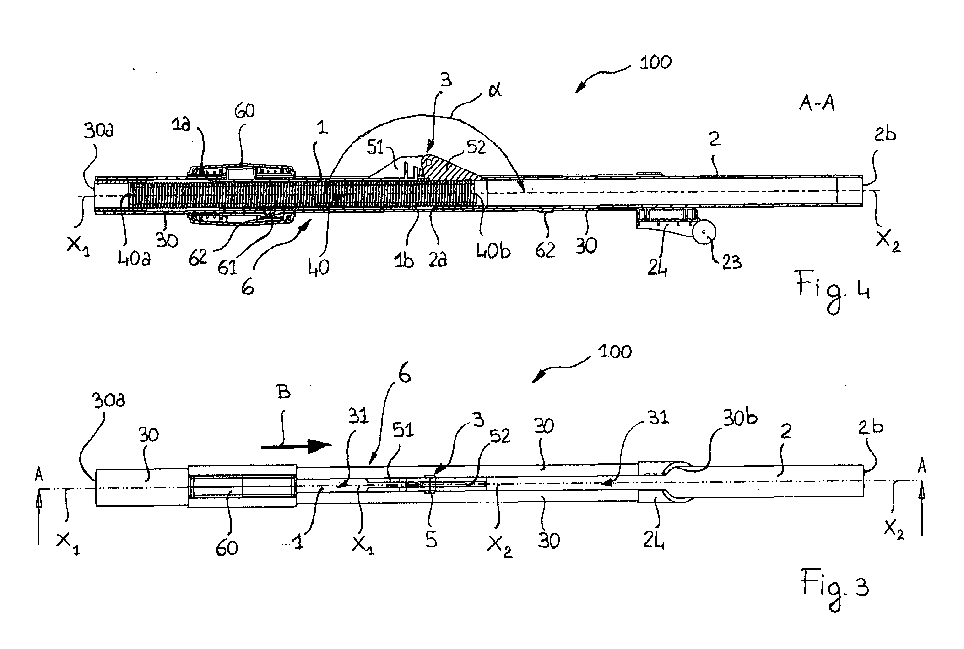

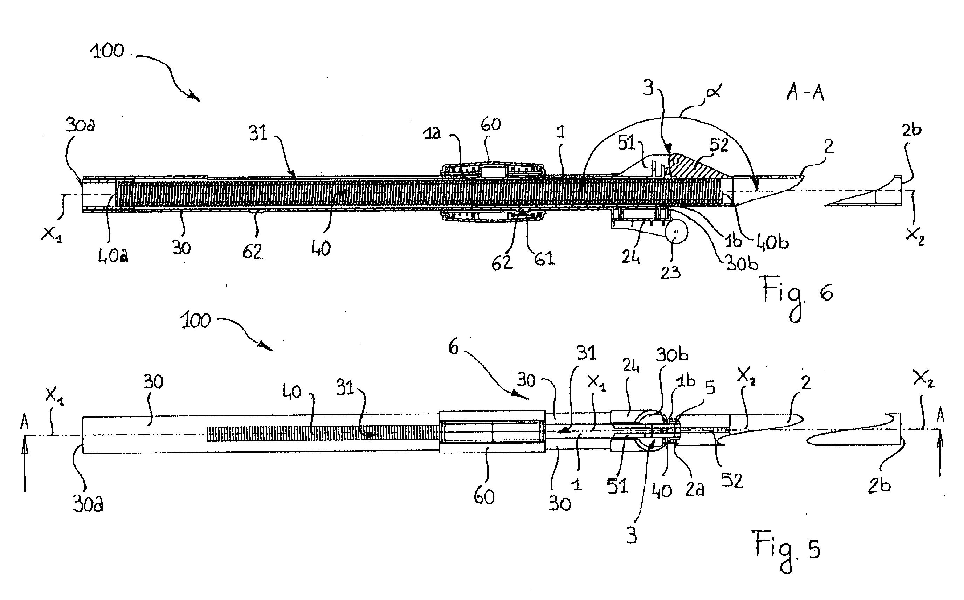

For the use, extension tube 100 is typically connected to a suction and/or ejection pipe of a domestic cleaning device at the end portion 30a of the rigid tubular element 30. During common cleaning operations of exposed surfaces, for example of a floor, a user uses the extension tube 100 in the first operating configuration thereof, with the rigid tubular elements 1 and 2 locked in a substantially aligned position (α = 180°). When it is necessary to carry out cleaning operations of hidden or hard-to-reach areas, for example gaps between a piece of furniture and the floor, the user sets the extension tube 100 in the second operating configuration, wherein the rigid tubular elements 1 and 2 can be articulated, by acting on the locking mechanism 6. In particular, the user through one hand pushes the grip sleeve 60, which is at the first stop position, in the direction of arrow B of figure 1 and 3, while through the other hand he holds the suction and/or ejection pipe. The rigid tubular elements 1 and 2 are thus made to slide with respect to the rigid tubular element 30, until the latter frees the articulated joint 3 and reaches the second stop position (figures 5, 6). The sliding of the rigid tubular elements 1 and 2 also determines the extension of the longitudinally extensible tubular element 40. At this point the rigid tubular elements 1 and 2 can be articulated with respect to each other and take a mutual angular position that makes it possible to clean the hidden area while the user continues to maintain a substantially upright position (see figures 2, 7 and 8). In the second operating configuration the rigid tubular elements 1 and 2 can also be substantially bent upon each other (α = 0°) as shown in figures 2a, 7 and 8.

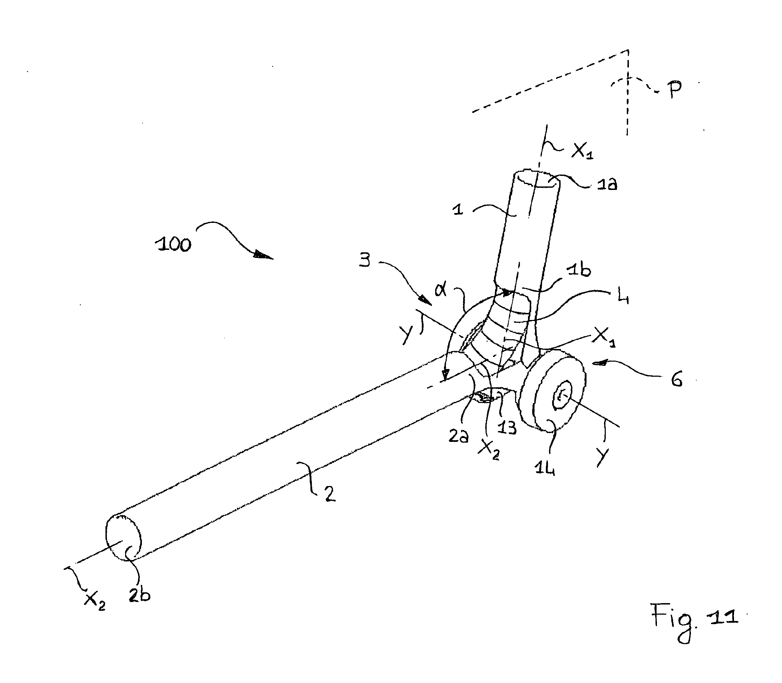

In a second preferred embodiment of the invention (figures 11-15), the locking mechanism 6 comprises a toothed coupling 70 between the rigid tubular elements 1 and 2 at the articulated joint 3, which can be selectively activated through actuating means.

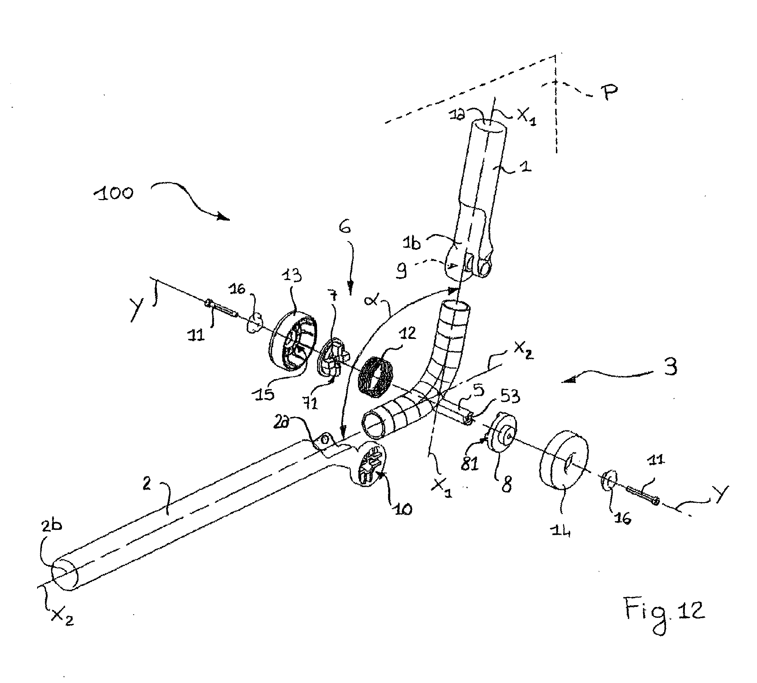

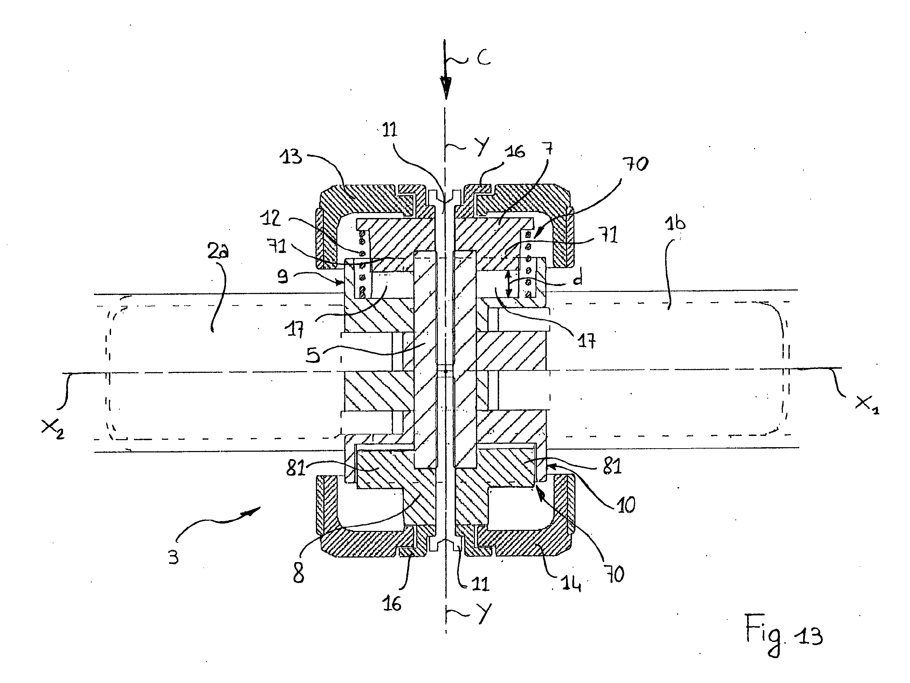

As shown in detail in figures 12 and 13, the toothed coupling 70 comprises a pair of toothed elements 7, 8 having respective front teeth 71, 81, preferably cuboid-shaped, and suitable for engaging, at opposite sides with respect to the longitudinal axes X₁-X₁ and X₂-X₂, respective seats 9, 10. The seats 9, 10 are formed at the end portions 1b and 2a of the rigid tubular elements 1 and 2, coaxially with respect to the articulation axis Y-Y. The toothed elements 7 and 8 are also mounted coaxially with respect to the articulation axis Y-Y and are associated through shape coupling with the opposite axial ends of the pin 5. The shape coupling allows the pin 5 and the toothed elements 7 and 8 to be firmly connected with respect to rotations about the articulation axis Y-Y. Such a coupling is preferably defined by diametric slots 53 formed at the opposite axial ends of the pin 5 and suitable for engaging with corresponding projections formed on each of the toothed elements 7, 8. The toothed elements 7, 8 are also fixed to the opposite axial ends of the pin 5 through conventional fastening means 11, for example screws that engage in threaded seats formed coaxially in the pin 5 at the aforementioned opposite axial ends. In this way the toothed elements 7, 8 are firmly connected with the pin 5 also with respect to translations along the articulation axis Y-Y.

The actuating means of the locking mechanism 6 comprise elastic means 12, such as for example one or more coil springs, Belleville springs or leaf springs, operatively arranged between the toothed element 7 and the corresponding seat 9 and active along the articulation axis Y-Y.

Also in this embodiment the extension tube 100 comprises rolling means arranged at the articulated joint 3 and comprising a pair of wheels 13, 14 having a rotation axis coinciding with the articulation axis Y-Y.

The wheels 13 and 14 are mounted, at respective mounting seats 15, in a axially outer position and coaxially with respect to the toothed elements 7 and 8 of the locking mechanism 6, at opposite sides with respect to the longitudinal axes X₁-X₁ and X₂-X₂. The mounting seats 15 are configured to be introduced, at respective axially inner ends (with reference to the mounted configuration shown in figure 13), in projecting portions defined on the toothed elements 7 and 8, and to receive assembly bushes 16 at respective axially outer ends (again with reference to the mounted configuration shown in figure 13).

The fastening means 11 axially lock the wheels 14 and 15, preventing them from coming loose. In the mounted configuration (figure 13) both the wheels 14, 15, and the toothed elements 7, 8 of the locking mechanism 6 are firmly connected to the pin 5 through the aforementioned fastening means, thus forming therewith a single body that can wholly undergo translations along the articulation axis Y-Y.

In alternative embodiments, not illustrated, the rolling means could also be arranged at the articulated joint 3 so as to have a rolling axis distinct from the articulation axis Y-Y.

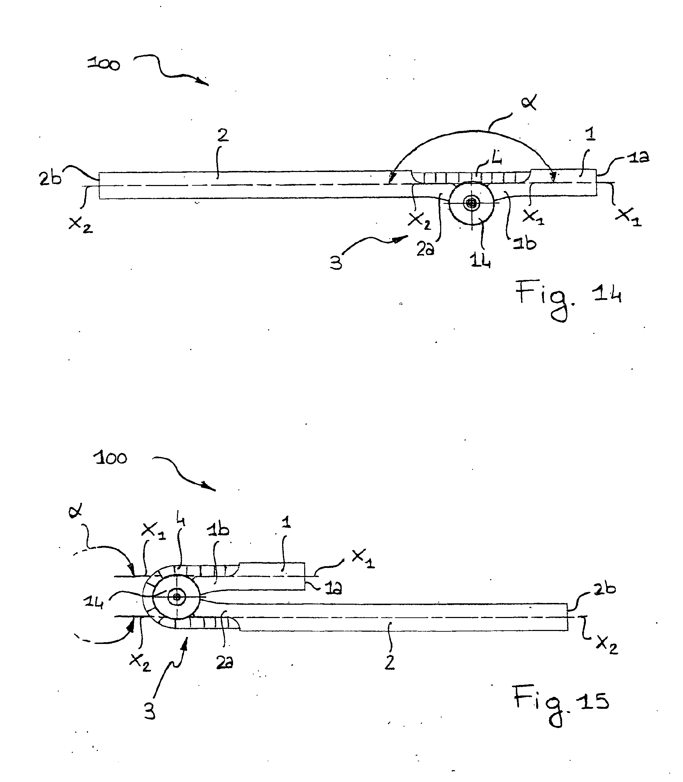

In this second preferred embodiment the toothed coupling of the locking mechanism 6 allows, in the first operating configuration of the extension tube 100, the rigid tubular elements 1 and 2 to be locked in more than one predetermined mutual angular position. The number of locking mutual angular positions and the corresponding values of the angle α are determined by the particular configuration of the toothed coupling. In particular, in the embodiment illustrated herein it is possible to lock the rigid tubular elements 1 and 2 in a mutual angular position wherein they are substantially aligned (α = 180°, figure 14) and in a mutual angular position wherein such elements are substantially bent upon each other (α = 360°, figure 15).

Figure 13 shows the configuration taken by the locking mechanism 6 when the extension tube 100 is in its first operating configuration, wherein the rigid tubular elements 1 and 2 are locked in one of the aforementioned locking mutual angular positions. In such a configuration the thrusting force caused by the elastic means 12 along the articulation axis Y-Y between the toothed element 7 and the corresponding seat 9 keeps the toothed element 8 engaged in the corresponding seat 10, thus determining the locking of the articulated joint 3. The toothed element 7 is engaged in the seat 9, but it is not completely inserted in it. Between the front part of the toothed element 7 and the bottom of the seat 9 a space 17 is defined having an axial extension d, substantially equal to the height of the teeth 81 of the toothed element 8.

To pass to the second operating configuration of the extension tube 100, the user must simply push on the wheel 13 in the direction indicated by the arrow C. Further to such a push, the wheel 13 and, firmly therewith, the toothed element 7, the pin 5, the toothed element 8 and the wheel 14 undergo a translation along the articulation axis Y-Y in the same direction as the arrow C. In particular, the toothed element 7 translates by a distance equal to the axial extension d of the space 17, until it substantially comes frontally into abutment with the bottom of the seat 9, while compressing at the same the elastic means 12. This axial translation is such as to allow the disengagement of the toothed element 8 from the seat 10. The extension tube 100 is now in its second operating configuration and the rigid tubular elements 1 and 2 are free to rotate with respect to each other.

The return to the first operating configuration occurs automatically, thanks to the action of the elastic means 12, whenever the rigid tubular elements 1 and 2 are brought into mutual angular positions allowing the toothed element 8 to again engage the corresponding seat 10. As already described, such mutual angular positions correspond to values of the angle α equal to 180° and to 360°.

The extension tube 100 can advantageously be used with various known domestic cleaning devices, either suction devices, such as for example vacuum cleaners, or fluid jet devices, such as for example steam cleaners or air blowers. The extension tube 100 can also be used in modern centralised suction systems. Such systems comprise a plurality of fixed suction inlets distributed at different points of a house and connected to a single centralised suction body of suitable power, to which, when needed, the user connects a suction pipe which can have the extension tube 100 associated therewith.

Figure 16 schematically illustrates a vacuum cleaner 400 equipped with the extension tube 100 of the invention. In particular, figure 16 shows how the extension tube 100, in the second operating configuration, allows cleaning operations to be easily carried out in hard-to-reach areas, such as a gap 500 between a piece of furniture 501 and a floor 502, without forcing the user to take uncomfortable or tiring positions.

The vacuum cleaner 400, of the conventional type and per se known, comprises a machine body 300 that is dragged along, suitable for housing suction means, also conventional and known per se, and a suction pipe 200 having a flexible portion 201 and a rigid portion 202. The extension tube 100 is associated with the rigid portion 202, preferably in a removable manner. A specific cleaning tool 600 can then be associated with the extension tube 100, preferably in a removable manner.

In general, the extension tube 100 can be produced as an independent element, and commercialised by itself or together with a suction and/or ejection pipe of a domestic cleaning device, but it can also be produced and commercialised as an integral part of such a suction and/or ejection pipe.

## Claims

1. Extension tube (100) for a domestic cleaning device (400), comprising:
- a first and a second rigid tubular element (1,2) having respective longitudinal axes (X₁-X₁, X₂-X₂) and connected through an articulated joint (3) having an articulation axis (Y-Y) substantially perpendicular to a plane (P) defined by said longitudinal axes (X₁-X₁, X₂-X₂);
- a flexible tubular element (4,40) to put said first and said second rigid tubular element (1,2) in fluid communication at said articulated joint (3),
**characterised in that** said articulated joint (3) is shaped in such a way that said articulation axis (Y-Y) does not intersect said longitudinal axes (X₁-X₁, X₂-X₂).

2. Extension tube (100) according to claim 1, comprising a locking mechanism (6) suitable for defining a first operating configuration of the extension tube (100), wherein said first and said second rigid tubular element (1,2) are locked in at least one predetermined mutual angular position, and a second operating configuration of the extension tube (100), wherein said first and said second rigid tubular element (1,2) are free to take a plurality of mutual angular positions.

3. Extension tube (100) according to claim 2, wherein in said at least one predetermined mutual angular position said first and said second rigid tubular element (1,2) are substantially aligned.

4. Extension tube (100) according to claim 2 or 3, wherein said locking mechanism (6) comprises a rigid locking body (30) slidably associated with said first and said second rigid tubular element (1,2) and movable between a first stop position defining said first operating configuration, wherein said rigid locking body (30) locks said articulated joint (3), and a second stop position defining said second operating configuration, wherein said rigid locking body (30) frees said articulated joint (3).

5. Extension tube (100) according to claim 4, wherein said locking mechanism (6) comprises stop means (61,62) for maintaining said rigid locking body (30) in said first stop position and in said second stop position.

6. Extension tube (100) according to claim 4 or 5, wherein said rigid locking body (30) comprises a third rigid tubular element (30) having a longitudinal slit (31) for receiving said articulated joint (3) in said first operating configuration, said extension tube (100) further comprising a longitudinally extensible tubular element (40) associated with said third rigid tubular element (30) and extensible over the length of said slit (31), said longitudinally extensible tubular element being suitable for ensuring the fluid-tight seal at said slit (31) in said second operating configuration.

7. Extension tube (100) according to claim 6, wherein said longitudinally extensible tubular element (40) is flexible and has a first end portion (40a) fixed to said third rigid tubular element (30) and a second end portion (40b) fixed to said second rigid tubular element (2).

8. Extension tube (100) according to claim 6 or 7, wherein said third rigid tubular element (30) at least partially houses said first rigid tubular element (1) and said locking mechanism (6) comprises a grip sleeve (60) firmly associated with said first rigid tubular element (1) and externally slidable on said third rigid tubular element (30).

9. Extension tube (100) according to any one of claims 4 to 8, comprising rolling means (23) for allowing said extension tube (100) in said second operating configuration to slide on a support surface (502).

10. Extension tube (100) according to claim 9, wherein said rolling means (23) comprise at least one wheel (23) associated with said rigid locking body (30).

11. Extension tube (100) according to claim 2 or 3, wherein said locking mechanism (6) comprises a toothed coupling (70) between said first and said second rigid tubular element (1,2) at said articulated joint (3), said toothed coupling (70) being able to be selectively activated through actuating means (12) for passing between said first operating configuration and said second operating configuration.

12. Extension tube (100) according to claim 11, wherein said toothed coupling (70) and said actuating means (12) are active along said articulation axis (Y-Y).

13. Extension tube (100) according to claim 11 or 12, wherein said toothed coupling (70) comprises at least one toothed element (7,8) and at least one respective seat (9,10) defined in said first or said second rigid tubular element (1,2), and wherein said actuating means (12) are active on said toothed coupling (70) so that in said first operating configuration said at least one toothed element (7,8) engages said at least one respective seat (9,10) and in said second operating configuration said at least one toothed element (7,8) frees said at least one respective seat (9,10).

14. Extension tube (100) according to any one of claims 11 to 13, wherein said actuating means (12) comprise elastic means (12).

15. Extension tube (100) according to any one of claims 11 to 14, wherein in said first operating configuration said first and second rigid tubular element (1,2) can be locked in at least one further predetermined mutual angular position.

16. Extension tube (100) according to claim 15, wherein in said at least one further predetermined mutual angular position said first and said second rigid tubular element (1,2) are substantially bent upon each other.

17. Extension tube (100) according to any one of claims 11 to 16, comprising rolling means (13, 14) at said articulated joint (3) for allowing said extension tube (100) in said second operating configuration to slide on a support surface (502).

18. Extension tube (100) according to claim 17, wherein said rolling means (13,14) comprise a pair of wheels (13,14) arranged on opposite sides with respect to the longitudinal axes (X₁-X₁, X₂-X₂) of said first and said second rigid tubular element (1,2).

19. Extension tube (100) according to claim 17 or 18, wherein said rolling means (13,14) have a rotation axis substantially coinciding with said articulation axis (Y-Y).

20. Extension tube (100) according to claim 19, wherein said locking mechanism (6) is associated with said rolling means (13,14).

21. Extension tube (100) according to claim 20, wherein said locking mechanism (6) and said rolling means (13,14) are at least partially firmly connected with respect to translations along said articulation axis (Y-Y) for passing between said first operating configuration and said second operating configuration.

22. Domestic cleaning device (400) comprising an extension tube (100) according to any one of the previous claims.

23. Vacuum cleaner (400) comprising a suction pipe (200) including an extension tube (100) according to any one of claims 1 to 21.

## Amended claims

### Amended claims in accordance with Rule 86(2) EPC.

**1.** Extension tube (100) for a domestic cleaning device (400), comprising:
- a first and a second rigid tubular element (1,2) having respective longitudinal axes (X₁-X₁, X₂-X₂) and connected through an articulated joint (3) having an articulation axis (Y-Y) substantially perpendicular to a plane (P) defined by said longitudinal axes (X₁-X₁, X₂-X₂), said articulated joint (3) being shaped in such a way that said articulation axis (Y-Y) does not intersect said longitudinal axes (X₁-X₁, X₂-X₂);
- a flexible tubular element (4,40) to put said first and said second rigid tubular element (1,2) in fluid communication at said articulated joint (3);
- a locking mechanism (6) suitable for defining a first operating configuration of the extension tube (100), wherein said first and said second rigid tubular element (1,2) are locked in at least one predetermined mutual angular position, and a second operating configuration of the extension tube (100), wherein said first and said second rigid tubular element (1,2) are free to take a plurality of mutual angular positions, said locking mechanism (6) comprising a rigid locking body (30) slidably associated with said first and said second rigid tubular element (1,2) and movable between a first stop position defining said first operating configuration, wherein said rigid locking body (30) locks said articulated joint (3), and a second stop position defining said second operating configuration, wherein said rigid locking body (30) frees said articulated joint (3),
**characterised in that** said rigid locking body (30) comprises a third rigid tubular element (30) externally associated with said first and said second rigid tubular element (1,2), said third rigid tubular element having a longitudinal slit (31) for receiving said articulated joint (3) in said first operating configuration, and **in that** said extension tube (100) further comprises a longitudinally extensible tubular element (40) associated with said third rigid tubular element (30) and extensible over the length of said slit (31) for ensuring the fluid-tight seal at said slit (31) in said second operating configuration.

**2.** Extension tube (100) according to claim 1, wherein in said at least one predetermined mutual angular position said first and said second rigid tubular element (1,2) are substantially aligned.

**3.** Extension tube (100) according to any one of the previous claims, wherein said locking mechanism (6) comprises stop means (61,62) for maintaining said rigid locking body (30) in said first stop position and in said second stop position.

**4.** Extension tube (100) according to any one of the previous claims, wherein said longitudinally extensible tubular element (40) is flexible and has a first end portion (40a) fixed to said third rigid tubular element (30) and a second end portion (40b) fixed to said second rigid tubular element (2).

**5.** Extension tube (100) according to any one of the previous claim, wherein said third rigid tubular element (30) at least partially houses said first rigid tubular element (1) and said locking mechanism (6) comprises a grip sleeve (60) firmly associated with said first rigid tubular element (1) and externally slidable on said third rigid tubular element (30).

**6.** Extension tube (100) according to any one of the previous claims, comprising rolling means (23) for allowing said extension tube (100) in said second operating configuration to slide on a support surface (502).

**7.** Extension tube (100) according to claim 6, wherein said rolling means (23) comprise at least one wheel (23) associated with said rigid locking body (30).

**8.** Domestic cleaning device (400) comprising an extension tube (100) according to any one of the previous claims.

**9.** Vacuum cleaner (400) comprising a suction pipe (200) including an extension tube (100) according to any one of claims 1 to 7.
